# EUROPEAN PATENT SPECIFICATION

(11) **EP 2 224 632 B1**
(45) Date of publication and mention of the grant of the patent: **18.01.2012**
(21) Application number: 09153884.3
(22) Date of filing: 27.02.2009
(51) Int. Cl.: H04L 1/00, H04B 1/16, H04W 52/02, H04L 1/18

(54) **Forward error correction decoding avoidance based on predicted code block reliability**
Vorwärtsfehler-Korrekturentschlüsselungsvermeidung basierend auf der vorhergesagten Verschlüsselungsblockierungsverlässlichkeit
Évitement du décodage de la correction d'erreurs en aval basé sur la fiabilité de blocs de codes prédite

(43) Date of publication of application: 01.09.2010
(60) Divisional application: 11187932.6
(73) Proprietor: RESEARCH IN MOTION LIMITED, Waterloo, Ontario N2L 3W8 (CA)
(72) Inventor: Duggan, Jason Robert, Kanata Ontario K2K 3E7 (CA); Earnshaw, Andrew Mark, Kanata Ontario K2K 3E7 (CA); Creasy, Timothy James, Kanata Ontario K2K 3E7 (CA)
(74) Representative: Moore, Barry

(56) References cited:
- WO-A1-2004/049661
- US-A1- 2003 053 435
- US-A1- 2003 058 820
- US-A1- 2007 110 095

## Description

### TECHNICAL FIELD

The present disclosure relates to communications networks and in particular to forward error correction (FEC) avoidance in a receiver of a communication device operating in the communications network.

### BACKGROUND

In broadband wireless networks the general assumption in existing receivers is that all received code blocks must be decoded. Decoding of forward error correction (FEC) codes (such as turbo codes) is a very expensive operation that consumes a significant amount of power in the receiver of a communications system. Operation of the FEC decoder, particularly inefficient operation of the FEC decoder when signal conditions or channel quality is poor, directly impacts power consumption and particularly battery life of the mobile wireless communications device.

Broadband wireless communication systems such as Universal Mobile Telecommunications System (UMTS), High-Speed Downlink Packet Access (HSDPA) or 3GPP Long-Term Evolution (LTE) wireless networks employ Hybrid-ARQ (automatic repeat request) error control method in the receive path to improve the ability of the decoder to successfully decode in poor signal conditions. With HARQ each code block (or set of code blocks) has a set of parity bits from a cyclic redundancy check (CRC) appended to the information bit stream. These parity bits allow the receiver of the mobile wireless communications device to determine if the set of hard bit decisions is correct. Subsequent to the decoding and CRC check the receiver sends a message to the transmitter 102 indicating the success of the decoding. If the CRC passes a positive acknowledgment is transmitted (an ACK). If the CRC fails the receiver sends a negative acknowledgment (NAK) to the transmitter 102. The transmitter 102 upon reception of a NAK will retransmit a subset of the bits in the code block. The receiver will then combine these retransmitted bits with the information from the original transmission and attempt a second decoding. With each retransmission the probability of successfully decoding the transmission is increased as the signal energy is accumulated and the benefits of diversity are realized. This retransmission process may be repeated several times until the decoding succeeds or some maximum number of retransmissions has been reached. During this process the decoder may still be processing code blocks with little or no potential success of decoding and the FEC decoder utilizes resources to decode blocks with low probability of success. The inefficient operation of the FEC decoder has a direct impact on power consumption of the communications device and particularly the battery life in a mobile wireless communications device.

WO 2004/049661 A1 discloses a method of decoding a communications signal in a digital communications system.

US 2007/0110095 A1 discloses another such method.

There is a need for improved utilization of the FEC decoder in the receiver of communication devices.

### SUMMARY

In the present disclosure there is provided a method for performing forward error correction (FEC) avoidance , as recited in claim 1.

There is also provided a forward error correction (FEC) avoidance device, as recited in claim 3.

### BRIEF DESCRIPTION OF THE DRAWINGS

Further features and advantages will become apparent from the following detailed description, taken in combination with the appended drawings, in which:
Figure 1 is a block diagram of communications device, in particular a mobile wireless communications device;
Figure 2 is a schematic representation of a FEC avoidance unit in a communications device receiver;
Figure 3 is a schematic representation of a FEC avoidance unit in-line with a FEC unit of the communications device receiver;
Figure 4 is a flowchart of a method of performing FEC decode avoidance in a communication device receiver; and
Figure 5 is a flowchart of a method of performing FEC decode avoidance and training in a communication device receiver.

It will be noted that throughout the appended drawings, like features are identified by like reference numerals.

### DETAILED DESCRIPTION

A device and method for improving power consumption by selectively avoiding the use of the forward error correction (FEC) decoder in a communications device receiver are provided. Power consumption is the communications device is improved by determining a reliability metric related to received radio frequency (RF) channel quality, or any other type optical or electrical communication channel, from a transmitter 102 in a communication network. The reliability metric is used to predict when the FEC decoder is likely to fail based on predicted code block reliability. The FEC decoder can then be disabled thus conserving power when the metric is below or equal to a defined reliability threshold and enabled when conditions improve and the metric is above the reliability threshold. The decoder is enabled or disabled, or alternatively bypassed, as required to conserve power based upon the implementation of the avoidance unit in the receiver. A HARQ unit can be utilized in conjunction with the avoidance unit, wherein if the FEC decoding unit is disabled or bypassed, the HARQ unit is instructed to send a NAK to the transmitter 102 to request a retransmission thereby increasing the probability of a successful decode. The ability to conserver power is particularly relevant to mobile wireless communications devices but is also applicable to fixed wireless communications devices, terrestrial or satellite, relays, peer-to-peer, and also wireline, optical, acoustic, ultrasonic, etc. communication systems where power consumption of the decoder may be an issue.

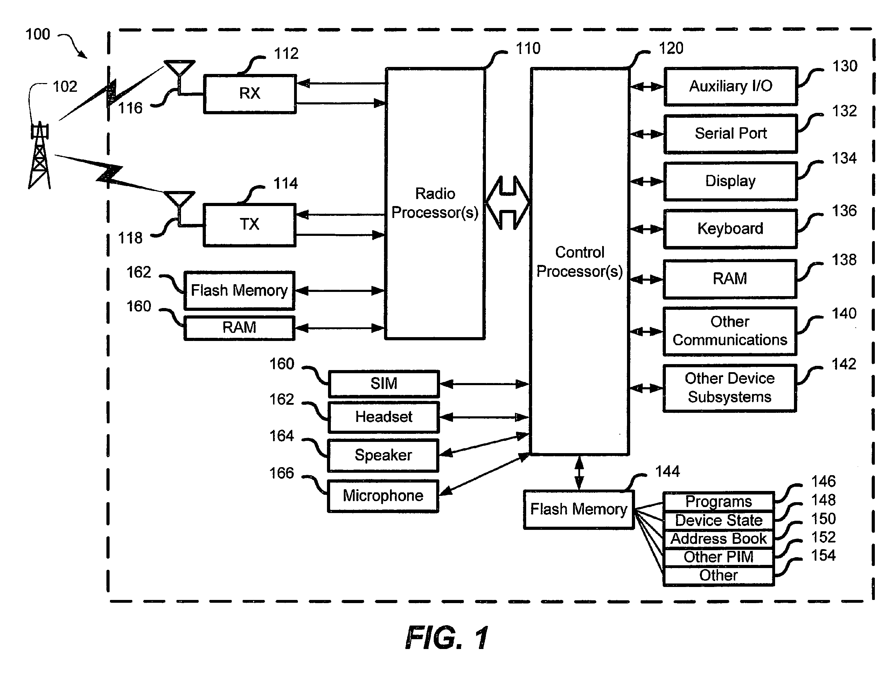

Figure 1 is a block diagram of a communication device 100, such as a mobile wireless communications device incorporating a communication subsystem having both a receiver (RX) 112 and a transmitter (TX) 114 for performing modulation and demodulation, as well as associated components such as one or more embedded or internal antenna elements 116 and 118, and a radio processor(s) 110 which may include one or more digital signal processors or application specific integrated circuits for performing decoding and encoding functions. The particular design of the communication subsystem will be dependent upon the communication network in which the device is intended to operate such as in a UMTS, HSDPA, 3GPP LTE or future 4G wireless networks. It should be understood that portions of the mobile wireless communications device 100 shown are specific to a mobile wireless communications and smart phone operation, however the structure may be modifiable to apply to other communications devices in regards to explaining the subject matter of the present disclosure.

The communications device 100 performs synchronization, registration or activation procedures by sending and receiving communication signals over a communications link, for example an RF channel from a transmitter 102, or in the case of a mobile wireless network a base station. Downlink signals received by antenna 116 through communication network 100 are input to receiver 112, which may perform such common receiver functions as signal amplification, frequency down conversion, filtering, channel selection and the like, and for example analog to digital (A/D) conversion. A/D conversion of a received signal allows more complex communication functions such as demodulation, decoding and synchronization to be performed in a digital signal processor (DSP). Decoding may utilize any type of FEC decoder, such as for example but not limited to a turbo decoder, a low-density parity-check (LDPC) decoder, a block code decoder, a Reed-Solomon decoder, a product code decoder, or a convolutional decoder in the decoding process. In addition any air interface technology (CDMA, OFDM, etc.) and receiver structure may be used with modifications to the reliability metric used to predict the code block reliability.

In a similar manner, signals to be transmitted are processed, including modulation and encoding for example, by a DSP and input to transmitter 114 for digital to analog conversion, frequency up conversion, filtering, amplification and transmission over the communication network via antenna 118. The radio processor(s) 110 not only processes communication signals, but also provides for receiver and transmitter control. One or more DSPs are located on radio processor(s) 110 with network communication functions performed through radio processor(s) 110. Radio processor(s) 110 interacts with receiver 112 and transmitter 114, and further with flash memory 122, random access memory (RAM) 124.

Control processor(s) 120 interacts with further device subsystems such as the display 124, flash memory 144, random access memory (RAM) 138, auxiliary input/output (I/O) subsystems 130, serial port 132, input device(s) 136, subscriber identity module 160, headset 162, speaker 164, microphone 166, other communications devices 140 and other device subsystems generally designated as 142. Data is provided to and received from radio processor(s) 110 to control processor(s) 120.

Some of the subsystems shown in Figure 1 perform communication-related functions, whereas other subsystems may provide "resident" or on-device functions. Notably, some subsystems, such input devices 136 and display 122, for example, may be used for both communication-related functions, such as entering a text message for transmission over a communication network, and device-resident functions such as a calculator or task list. The input devices 136 may comprise but not be limited to keyboard, trackball, thumbwheel or touch screen.

Software used by radio processor(s) 110 and control processor(s) 120 is preferably stored in a persistent store such as flash memory 122 and 144, which may instead be a read-only memory (ROM) or similar storage element (not shown). It will be appreciated that the operating system, specific device applications, or parts thereof, may be temporarily loaded into a volatile memory such as RAM 124 and RAM 138. Received communication signals may also be stored in RAM 124.

As shown, flash memory 144 can be segregated into different areas for computer programs 146, device state 148, address book 150, other personal information management (PIM) 152 and other functionality generally designated as 154. These different storage types indicate that each program can allocate a portion of flash memory 144 for their own data storage requirements. Control processor(s) 120, in addition to its operating system functions, preferably enables execution of software applications on the communications device.

For voice communications, overall operation of communications device 100 is similar, except that received signals would preferably be output to the speaker 164 or headset 162 and signals for transmission would be generated by the microphone 166. Other device subsystems 140, such as a short-range communications subsystem, is a further optional component which may provide for communication between wireless mobile device 100 and different systems or devices, which need not necessarily be similar devices. For example, the subsystem 140 may include an infrared device and associated circuits and components or a Bluetooth™ communication module to provide for communication with similarly enabled systems and devices.

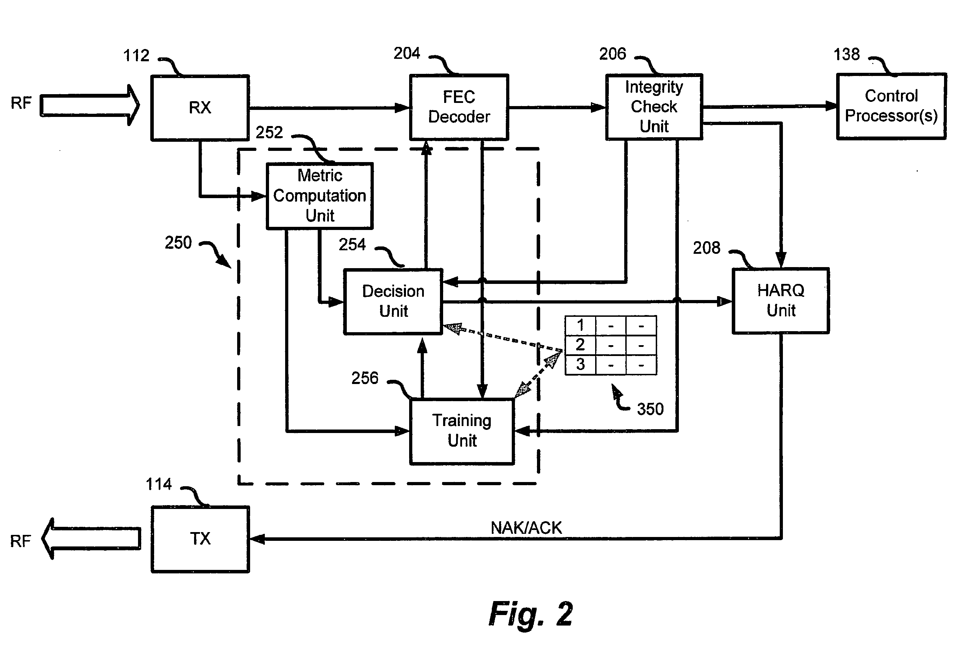

Figure 2 is a schematic representation of a FEC avoidance device 250. The device may be integrated as a dedicated integrated circuit or as multiple components as required. In addition, some of the logic functions may be implemented as part of the radio processor(s) 110 or control processor(s) 120 depending on the design considerations. The FEC avoidance apparatus 250 comprises a metric computation unit 252 for determining a metric value associated with a received signal, a decision unit 254 for determining if the FEC decoder 204 should be disabled or enabled and a training unit 256 for determining threshold values to be used in comparison to the determined metric. These units may be discrete components (or units), an integrated unit or incorporated in other components of the wireless mobile device. The avoidance device 250 disables or blocks the operation of the FEC decoder 204 through communication with the FEC decoder 204 to stop decoding of the incoming code blocks.

The metric computation unit 252 utilizes RF channel characteristics to generate a reliability metric associated with the quality of the channel (or received signal) from the receiver 112 to measure the code block reliability. It is beneficial to estimate the code block reliability across all (or a subset of) of the code blocks in the transport block and to adjust the threshold based on the overall statistics of the transport block. These overall statistics could be a single measure across all the bits in all the code blocks, or it could be a measure derived from the individual measures for each code block (such as the average, variance, or number above or below a certain threshold). These additional statistics could then be used to estimate the overall probability of decoding the whole transport block successfully. For instance, if all of the code blocks have a high reliability metric except for one code block then it may make sense to have a low threshold (so that all code blocks will likely be decoded) since it is relatively likely that the whole transport block may be decoded successfully. Consider now the opposite situation. If many of the code blocks within the transport block have a poor code block reliability then it is likely that at least one of these will fail and the overall success of decoding the transport block is therefore low. In this case it makes sense to have a high threshold, or perhaps to avoid processing all of the code blocks in the transport block altogether (which can be considered a special case where we set the threshold extremely high).

A number of different metrics may be applicable, for example for some systems such as code division multiple access (CDMA) systems the Signal-to-Interference-plus-Noise Ratio (SINR) would be a measure for indicating the likelihood of decoding success. For orthogonal frequency division multiplexing (OFDM) systems, the SINR generally varies from bit-to-bit and so a better measure would incorporate additional statistics about the distribution of SINRs across the bits, such as the variance leading to a two-dimensional metric with decision regions rather than a single dimension. One common one-dimensional metric is an "effective SINR" computed using the Effective Exponential SNR Mapping (EESM). The EESM takes the SINR on each of the individual subcarriers and combines them to yield an effective SINR value. A third measure that is more accurate than the EESM and is more applicable to a mixed modulation scenario is one based on a mutual information measure. Here there are separate modulation and coding models. The modulation model maps the SINR of each of the individual subcarriers to a symbol-by-symbol mutual information based on the modulation order. The coding model then maps the sum or average of the mutual information values across the code block to a decoding reliability measure.

The decision unit 254 utilizes a retrieved threshold to compare to the reliability metric from the metric computation unit to selectively enable or disable the FEC decoding. Threshold values may be preloaded in memory during an initial software load or programming of the wireless mobile device. The threshold is determined through empirical evaluation with the particular decoder being employed or during a training process performed during normal operation of the receiver using a training unit 256. The threshold must be set in such a way that the probability of falsely predicting decoder failure (i.e. declaring failure but the decoding would have succeeded) is low. Otherwise, the receiver will have to demodulate another code block retransmission that may not have been necessary, thereby possibly increasing the overall power consumption.

A table 350, stored in memory may be provided, that contains the reliability threshold values. The threshold values may also be associated with particular channel parameters so that different threshold values may be utilized for different channel configurations. The threshold may be based on a number of parameters associated with the FEC decoder performance in relation to the metric. Therefore the threshold may be a function of the desired false detection probability; a function of the maximum number of iterations of the FEC decoder; a function of the code rate; a function of the code block size; a function of the means by which the FEC decoder is implemented; or a function of the number of retransmissions received or number of retransmissions remaining (before the maximum is reached) for a given HARQ process.

The training unit 256 can be used to determine or refine threshold values to be used by the decision unit 254. The receiver may go into a training mode where it computes the metric but completes the decoding to determine which threshold to utilize. The training unit can also track the success of the decoder against the metric values and over time adjust the threshold value to yield a more accurate prediction of FEC decoder success to improve decode efficiency. The training unit 256 modifies or populates threshold values in table 350 during the training process. The table can be stored in memory such as 160 or 162 or in dedicated memory associated with the avoidance apparatus 250 and may be adapted in real-time at the receiver.

In the receive path, an integrity check unit 206 performs a CRC or similar check on the received data blocks upon which decoding has been performed. The integrity check determines if the received code block is intact and therefore contains valid data. Data that passes the CRC check is passed to the control processor(s) 120. The integrity check unit 206 notifies a HARQ mechanism, represented by unit 208, whether the CRC check passed or failed. In many wireless systems (such as LTE) the data is delivered in blocks called transport blocks. The data within a transport block is divided up into multiple code blocks. An additional CRC is appended to the transport block as a whole and if an error is detected the HARQ mechanism delivers a NAK to the transmitter to request a retransmission. In other words, an error in any of the code blocks within a transport block will trigger a NAK. As mentioned earlier, with HARQ there is usually a maximum number of retransmissions that may occur. If the current transmission is the last retransmission it is probably preferable to disable the unit and allow decoding. Note that the measure and decision may be able to be computed based on channel and noise estimates and thereby also allow for avoidance of performing full demodulation of the signal (i.e. further power savings). In a HARQ situation, however, one would likely want to perform this demodulation and soft combine the data from the multiple transmissions to allow for increased probability of success after future transmissions. The HARQ unit can then provide a NAK or ACK to the transmitter 114, by the appropriate encoding through the radio processor(s) 110 (not shown).

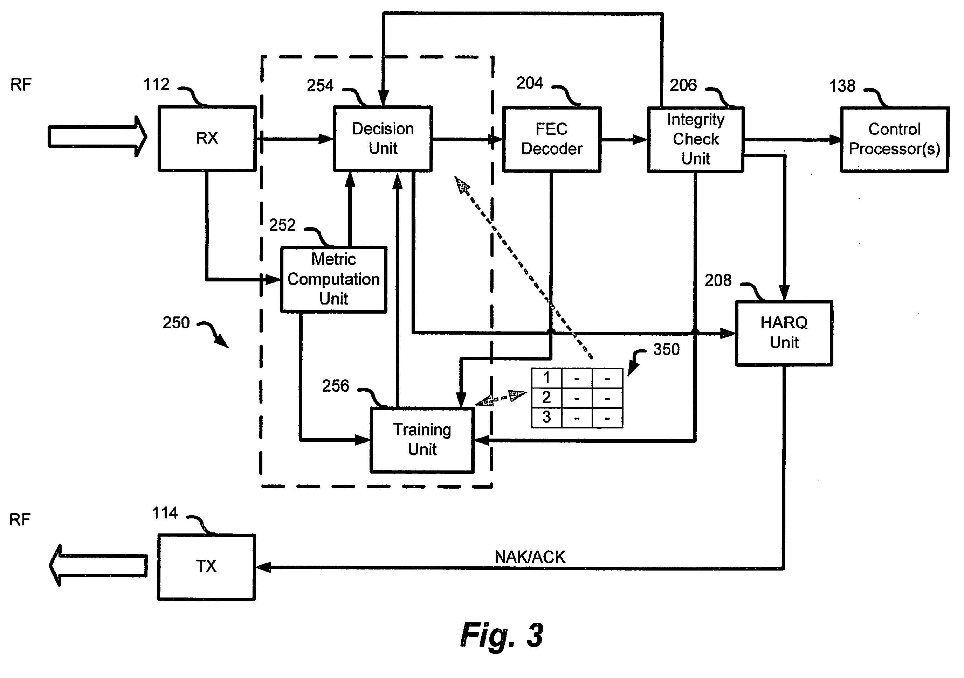

Figure 3 is an alternative configuration wherein the avoidance device 250 may be in-line with the received data from the receiver 112 and the FEC decoder 204 and may disable the FEC decoder by blocking data from being passed to the decoder. In this example the decision unit 254 selectively blocks or enables that received data stream to be passed to the FEC decoder 204.

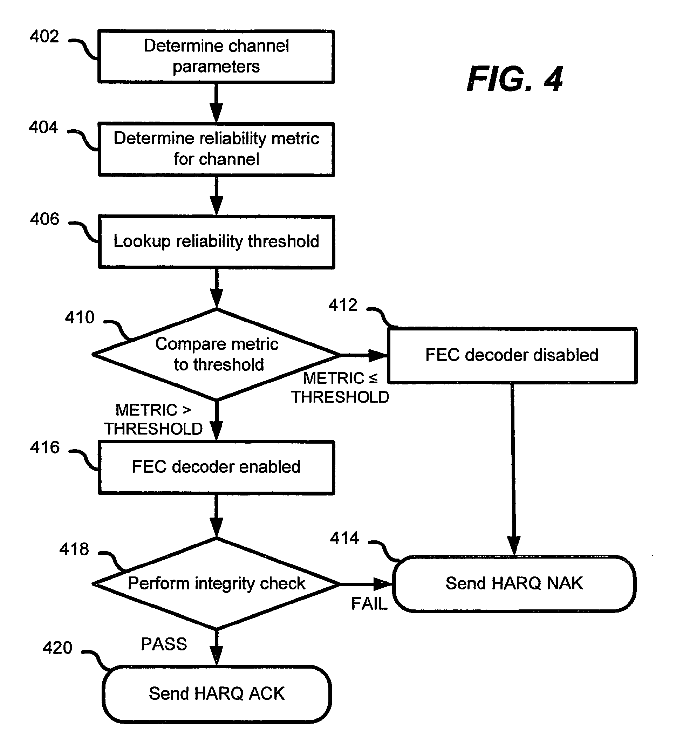

Figure 4 is a method of performing FEC avoidance based upon predicted code block reliability. The method commences with the receiver down-converting a received signal and determining channel parameters 402. The channel parameters may be based upon modulation type, code block size, number of retransmissions, or code rate. A reliability metric is then determined 404 for the channel based upon a quality metric such as SINR of the received code blocks provided by receiver 112. Based upon the channel parameters a lookup can then be performed to determine an associated reliability threshold 406.

Alternatively a single threshold may be provided and used for all channel parameter configurations. The metric is then compared to the threshold 410. If the metric is above the threshold the FEC decoder is enabled 416. An integrity check is then performed 418 based upon an integrity test such as by determining a CRC for the received code block. If the integrity check passes, PASS at 418, a HARQ ACK 420 will be provided, by the HARQ mechanism to the transmitter of the wireless mobile device. If the integrity check fails, FAIL at 418, a HARQ NAK 414 will be provided, by the HARQ mechanism to the transmitter and back to the transmitter 102. In the case where the integrity check fails, but the metric is above the threshold, this indicates that the threshold is possibly too low and should be refined to a higher value. During the metric comparison at 410, if the metric is less than or equal to the threshold, the FEC decoder is avoided by being disabled 412 or bypassed. At this point it is assumed the integrity check would fail and a HARQ NAK 414 is sent to the transmitter 102.

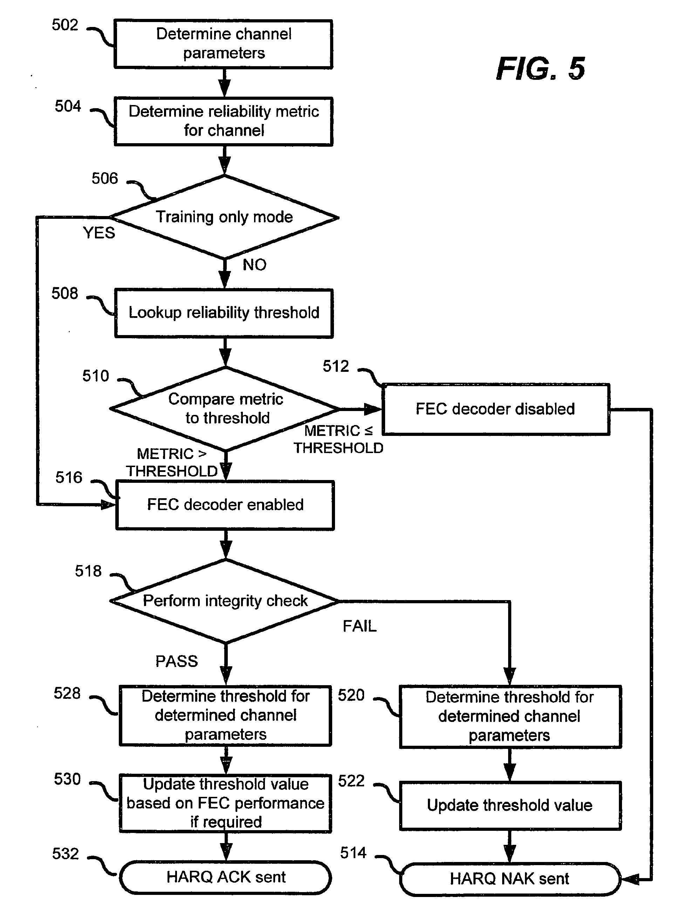

Figure 5 is a method of performing FEC avoidance also comprising a training mode to determine an optimal reliability metric. The method commences with the receiver down-converting a received signal and determining channel parameters 502. The channel parameters may be based upon modulation type, code block size, number of retransmissions, or code rate. A reliability metric is then determined 504 for the channel based upon a quality metric such as SINR of the received code blocks. If the wireless mobile device is provided without threshold information populated in the avoidance table, a training mode 506 may be initiated to determine the metric value for successful decoding. If the training mode is enabled, YES at 506, the FEC decoder is enabled 516 and the received signal is processed. If the training mode is not enabled, NO at 506, it is assumed that the reliability threshold value is available or does not need to be refined. Using the determined channel parameters, a lookup can then be performed to determine the associated reliability threshold 508 if unique threshold values are defined for different channel configurations. The metric is then compared to the threshold 510. If the metric is above the threshold the FEC decoder is enabled 516. If the metric comparison at 510 is less than or equal to the reliability threshold, the FEC decoder is avoided by being disabled 512 or bypassed and a HARQ NAK 514 is sent back to the transmitter 102.

When the decoder is enabled, an integrity check is then performed 518 on the received code blocks. If the integrity check passes, PASS at 518, a reliability threshold for the determined channel parameters is determined 528. The reliability threshold value is then updated at 530 and a HARQ ACK 532 is then sent to the transmitter 102. If the integrity check fails, FAIL at 518, a reliability threshold for the determined channel parameters is determined 520. The reliability threshold value is then updated at 522 and a HARQ NAK 514 is then sent to the transmitter 102.

The training mode may available at any time when the wireless mobile device is operating or configurable during specific operations such as initialization or after a specified number of failed threshold decodes.

The device and methods according to the present disclosure may be implemented by any hardware, software or a combination of hardware and software having the above described functions. The software code, either in its entirety or a part thereof, may be stored in a computer-readable memory. Further, a computer data program representing the software code may be embodied on a computer-readable memory. Although the avoidance unit is described in terms of units, the functions of the avoidance unit may be integrated into other components of the wireless mobile device such as the receiver, decoder or radio processors.

While a particular embodiment of the present device and methods for FEC decoder avoidance has been described herein, it will be appreciated by those skilled in the art that changes and modifications may be made thereto without departing from the disclosure in its broadest aspects and as set forth in the following claims.

## Claims

1. A method for performing forward error correction, FEC, avoidance in a receiver of a mobile wireless communications device (100), the method comprising:
determining (502) channel parameters of a received radio frequency, RF, channel,
determining (404, 504) a reliability metric value using one of an Effective Exponential Signal-to-Noise Mapping, EESM, measurement or a mutual information measure of the received RF channel, the measurement being made over a code block of one or more code blocks received from a transmitter;
determining (406, 508) a code block reliability threshold value;
comparing (410, 510) the reliability metric value to the reliability threshold value;
disabling (412, 512) a FEC decoder (204) in the mobile wireless communications device (100) when the reliability metric value is below or equal to the reliability threshold value and sending a Hybrid Automatic Repeat request, HARQ, negative acknowledgement, NAK, (414, 514) to the transmitter when the FEC decoder is disabled (412); and
enabling (416, 516) the FEC decoder (204) when the reliability metric value is above the reliability threshold value and performing an integrity check on decoded code blocks and sending an HARQ acknowledgment, ACK, (420, 532) to the transmitter when the integrity check is successful, sending a HARQ NAK (414, 514) when the integrity check is not successful,
wherein the determining (406, 508) of the reliability threshold value further comprises performing a lookup of the reliability threshold value in a table (350) stored in memory, the table containing one or more reliability threshold values, each reliability threshold value being associated with defined channel parameters and the method further comprising:
entering a training mode (506) in which
the FEC decoder is enabled (516)
further comprising:
performing the integrity check (518) on decoded code blocks and if the integrity check fails:
determining (520) the reliability threshold value for the determined channel parameters;
updating (522) the reliability threshold value in the table for the determined channel parameters based upon the failure of the decoding if the reliability metric value exceeds the reliability threshold value; and
sending (514) the HARQ NAK to the transmitter in a communications network;
and if the integrity check passes:
determining (528) the reliability threshold value for the determined channel parameters;
updating (530) the reliability threshold value in the table for the determined channel parameters based upon the success of the decoding if the reliability metric value is below or equal to the reliability threshold value, and
sending (532) the HARQ ACK to the transmitter in the communications network.

2. The method of claim 1, the channel parameters comprising one or more of modulation type, code block size, number of retransmissions, or code rate.

3. A forward error correction, FEC, avoidance device (250), for use in a mobile wireless communications device (100), the FEC avoidance device comprising:
a unit for determining (502) channel parameters of a received radio frequency, RF, channel,
a metric computation unit (252) for determining (404, 504) a reliability metric value using one of an Effective Exponential Signal-to-Noise Mapping, EESM, measurement or mutual information measure of the received RF channel, the measurement being made over a code block of one or more code blocks received from a transmitter, wherein the reliability metric value increases with increasing probability of decoding success;
a decision unit (254) for determining (406, 508) a reliability threshold value and comparing (410, 510) the reliability metric value to the reliability threshold value to selectively disable (412, 512) a FEC decoder (204) of the communications device (100) to avoid the decoding process when the reliability metric value is below or equal to the reliability threshold value, the decision unit arranged to request that a Hybrid Automatic Repeat reQuest, HARQ, negative acknowledgement, NAK, (414, 514) be sent to the transmitter when the FEC decoder is disabled, and to selectively enable (416, 516) the FEC decoder (204) when the reliability metric value is above the reliability threshold value and to perform an integrity check on decoded code blocks and to request that a HARQ acknowledgment, ACK, (420, 532) be sent to the transmitter when the integrity check is successful, and to send a HARQ NAK (414, 514) when the integrity check is not successful (412); and
a table (350) stored in memory of the communications device, the table containing one or more reliability threshold values associated with one or more channel parameters wherein the decision unit determines the reliability threshold value by performing a lookup in the table, the forward error correction avoidance device further comprising:
a training unit (256), which when operating in a training mode (506), the FEC decoder being enabled in said training mode (516), utilizes results of the integrity check on decoded code blocks, and if an integrity check fail result occurs determines (520) the reliability threshold value for the determined channel parameters; updates (522) the reliability threshold value in the table for the determined channel parameters based upon the failure of the decoding if the reliability metric value exceeds the reliability threshold value, and if an integrity check pass result occurs determines (528) the reliability threshold value for the determined channel parameters; updates (530) the reliability threshold value in the table for the determined channel parameters based upon the success of the decoding if the reliability metric value is below or equal to the reliability threshold value.

4. The forward error correction avoidance device of claim 3 wherein the channel parameters of the received RF channel comprise one or more of modulation type, code block size, number of retransmissions, or code rate.

5. The method of any one of claims 1 or 2 or the forward error correction avoidance device of any one of claims 3 or 4, wherein the FEC decoder is one of a turbo decoder, a low-density parity-check, LDPC, decoder; a block code decoder, a Reed-Solomon decoder, a product code decoder, or a convolutional decoder.

## Patentansprüche

1. Verfahren zur Durchführung einer Vorwärtsfehlerkorrektur(FEC - forward error correction)-Vermeidung in einem Empfänger einer mobilen drahtlosen Kommunikationsvorrichtung (100), wobei das Verfahren aufweist:
Bestimmen (502) von Kanalparametern eines empfangenen Funkfrequenz(RF - radio frequency)-Kanals;
Bestimmen (404, 504) eines Zuverlässigkeitsmetrikwerts unter Verwendung eines aus einer EESM(Effective Exponential Signal-to-Noise Mapping)-Messung oder einem gemeinsamen Informations-Maß des empfangenen RF-Kanals, wobei die Messung über einen Codeblock von einem oder mehreren Codeblöcken gemacht wird, der/die von einem Sender empfangen wird/werden;
Bestimmen (406, 508) eines Codeblock-Zuverlässigkeitsschwellenwerts;
Vergleichen (410, 510) des Zuverlässigkeitsmetrikwerts mit dem Zuverlässigkeitsschwellenwert;
Deaktivieren (412, 512) eines FEC-Decodierers (204) in der mobilen drahtlosen Kommunikationsvorrichtung (100), wenn der Zuverlässigkeitsmetrikwert unter oder gleich dem Zuverlässigkeitsschwellenwert ist, und Senden einer HARQ(Hybrid Automatic Repeat request)-Negativbestätigung (NAK - negative acknowledgement) (414, 514) an den Sender, wenn der FEC-Decodierer deaktiviert ist (412); und
Aktivieren (416, 516) des FEC-Decodierers (204), wenn der Zuverlässigkeitsmetrikwert über dem Zuverlässigkeitsschwellenwert liegt, und Durchführen einer Integritätsprüfung auf decodierten Codeblöcken und Senden einer HARQ-Bestätigung (ACK - acknowledgement) (420, 520) an den Sender, wenn die Integritätsprüfung erfolgreich ist, und Senden einer HARQ-NAK (414, 514), wenn die Integritätsprüfung nicht erfolgreich ist,
wobei das Bestimmen (406, 508) des Zuverlässigkeitsschwellenwerts weiter aufweist ein Durchführen einer Suche des
Zuverlässigkeitsschwellenwerts in einer Tabelle (350), die in einem Speicher gespeichert ist, wobei die Tabelle einen oder mehrere Zuverlässigkeitsschwellenwerte enthält, wobei jeder Zuverlässigkeitsschwellenwerts mit definierten Kanalparametern assoziiert ist, und das Verfahren weiter aufweist:
Beginnen eines Trainingsmodus (506), in dem
der FEC-Decodierer aktiviert ist (516),
weiter aufweisend
Durchführen der Integritätsprüfung (518) auf decodierten Codeblöcken,
und wenn die Integritätsprüfung fehlschlägt:
Bestimmen (520) des Zuverlässigkeitsschwellenwerts für die bestimmten Kanalparameter;
Aktualisieren (522) des Zuverlässigkeitsschwellenwerts in der Tabelle für die bestimmten Kanalparameter basierend auf dem Fehlschlagen des Decodierens, wenn der Zuverlässigkeitsmetrikwert den Zuverlässigkeitsschwellenwert übersteigt; und
Senden (514) der HARQ-NAK an den Sender in einem Kommunikationsnetzwerk;
und wenn die Integritätsprüfung erfolgreich ist:
Bestimmen (528) des Zuverlässigkeitsschwellenwerts für die bestimmten Kanalparameter;
Aktualisieren (530) des Zuverlässigkeitsschwellenwerts in der Tabelle für die bestimmten Kanalparameter basierend auf dem Erfolg des Decodierens, wenn der Zuverlässigkeitsmetrikwert unter oder gleich dem Zuverlässigkeitsschwellenwert ist; und
Senden (532) der HARQ-ACK an den Sender in dem Kommunikationsnetzwerk.

2. Verfahren gemäß Anspruch 1, wobei die Kanalparameter eines oder mehrere aus Modulationstyp, Codeblockgröße, Anzahl von erneuten Übertragungen oder Coderate aufweisen.

3. Vorwärtsfehlerkorrektur(FEC- forward error correction)-Vermeidungsvorrichtung (250) zur Verwendung in einer mobilen drahtlosen Kommunikationsvorrichtung (100), wobei die FEC-Vermeidungsvorrichtung aufweist:
eine Einheit zum Bestimmen (502) von Kanalparametern eines empfangenen Funkfrequenz(RF - radio frequency)-Kanals;
eine Metrikberechnungseinheit (252) zum Bestimmen (404, 504) eines Zuverlässigkeitsmetrikwerts unter Verwendung eines aus einer EESM(Effective Exponential Signal-to-Noise Mapping)-Messung oder einem gemeinsamen Informations-Maß des empfangenen RF-Kanals, wobei die Messung über einen Codeblock von einem oder mehreren Codeblöcken gemacht wird, der/die von einem Sender empfangen wird/werden, wobei der Zuverlässigkeitsmetrikwert mit zunehmender Wahrscheinlichkeit eines Decodiererfolgs zunimmt;
eine Entscheidungseinheit (254) zum Bestimmen (406, 508) eines Zuverlässigkeitsschwellenwerts und Vergleichen (410, 510) des Zuverlässigkeitsmetrikwerts mit dem Zuverlässigkeitsschwellenwert zum selektiven Deaktivieren (412, 512) eines FEC-Decodierers (204) der Kommunikationsvorrichtung (100), um den Decodierprozess zu vermeiden, wenn der Zuverlässigkeitsmetrikwert unter oder gleich dem Zuverlässigkeitsschwellenwert ist, wobei die Entscheidungseinheit ausgebildet ist zum Anfordern, dass eine HARQ(Hybrid Automatic Repeat reQuest)-Negativbestätigung (NAK - negative acknowledgement) (414, 514) an den Sender gesendet wird, wenn der FEC-Decodierer deaktiviert ist, und zum selektiven Aktivieren (416, 516) des FEC-Decodierers (204), wenn der Zuverlässigkeitsmetrikwert über dem
Zuverlässigkeitsschwellenwert liegt, und zum Durchführen einer Integritätsprüfung auf decodierten Codeblöcken und zum Anfordern, dass eine HARQ-Bestätigung (ACK - acknowledgement) (420, 520) an den Sender gesendet wird, wenn die Integritätsprüfung erfolgreich ist, und zum Senden einer HARQ-NAK (414, 514), wenn die Integritätsprüfung nicht erfolgreich ist (412); und
eine Tabelle (350), die in dem Speicher der Kommunikationsvorrichtung gespeichert ist, wobei die Tabelle einen oder mehrere Zuverlässigkeitsschwellenwerte enthält, der/die mit einem oder mehreren Kanalparametern assoziiert ist/sind, wobei die Entscheidungseinheit den Zuverlässigkeitsschwellenwert bestimmt durch Durchführen einer Suche in der Tabelle, wobei die Vorwärtsfehlerkorrektur-Vermeidungsvorrichtung weiter aufweist:
eine Trainingseinheit (256), die bei einem Betrieb in einem Trainingsmodus (506), wobei der FEC-Decodierer in dem Trainingsmodus aktiviert ist (516), Ergebnisse der Integritätsprüfung auf decodierten Codeblöcken verwendet, und wenn ein Integritätsprüfung-fehlgeschlagen-Ergebnis auftritt, den Zuverlässigkeitsschwellenwert für die bestimmten Kanalparameter bestimmt (520); den Zuverlässigkeitsschwellenwert in der Tabelle für die bestimmten Kanalparameter basierend auf dem Fehlschlagen des Decodierens aktualisiert (522), wenn der Zuverlässigkeitsmetrikwert den Zuverlässigkeitsschwellenwert übersteigt,
und wenn ein Integritätsprüfung-erfolgreich-Ergebnis auftritt, den Zuverlässigkeitsschwellenwert für die bestimmten Kanalparameter bestimmt (528); den Zuverlässigkeitsschwellenwert in der Tabelle für die bestimmten Kanalparameter basierend auf dem Erfolg des Decodierens aktualisiert (530), wenn der Zuverlässigkeitsmetrikwert unter oder gleich dem Zuverlässigkeitsschwellenwert ist.

4. Vorwärtsfehlerkorrektur-Vermeidungsvorrichtung gemäß Anspruch 3, wobei die Kanalparameter des empfangenen RF-Kanals eines oder mehrere aus Modulationstyp, Codeblockgröße, Anzahl von erneuten Übertragungen oder Coderate aufweisen.

5. Verfahren gemäß einem der Ansprüche 1 oder 2 oder die Vorwärtsfehlerkorrektur-Vermeidungsvorrichtung gemäß einem der Ansprüche 3 oder 4, wobei der FEC-Decodierer einer ist aus einem Turbo-Decodierer, einem LDPC(low-density parity-check)-Decodierer; einem Blockcode-Decodierer, einem Reed-Solomon-Decodierer, einem Produktcode-Decodierer oder einem Faltungs-Decodierer.

## Revendications

1. Procédé destiné à éviter la correction d'erreur directe, FEC sur un récepteur d'un dispositif de communication mobile sans fil (100), le procédé comprenant les étapes consistant à :
déterminer (502) des paramètres de canal pour un canal de radiofréquence RF reçu ;
déterminer (404, 504) une valeur de métrique de fiabilité en utilisant soit une mesure de mappage signal sur bruit exponentiel efficace, EESM soit une mesure d'informations mutuelle du canal RF reçu, la mesure étant effectuée sur un bloc de code fait d'un ou plusieurs blocs de code reçus d'un émetteur ;
déterminer (406, 508) une valeur de seuil de fiabilité du bloc de code ;
comparer (410, 510) la valeur de métrique de fiabilité avec la valeur de seuil de fiabilité ;
inhiber (412, 512) un décodeur FEC (204) du dispositif de communication mobile sans fil (100) lorsque la valeur de métrique de fiabilité est inférieure ou égale à la valeur de seuil de fiabilité et envoyer à l'émetteur une demande de répétition automatique hybride, HARQ à l'émetteur constituant un accusé de réception négatif, NAK (414, 514) lorsque le décodeur FEC est inhibé (412) ; et
valider (416, 516) le décodeur FEC (204) lorsque la valeur de métrique de fiabilité est supérieure à la valeur de seuil de fiabilité, appliquer un contrôle d'intégrité aux blocs de code décodés, envoyer à l'émetteur un accusé de réception, ACK, HARQ (420, 532) lorsque le contrôle d'intégrité est positif, envoyer un message NAK HARQ (414, 514) lorsque le contrôle d'intégrité n'est pas positif ;
la détermination (406, 508) de la valeur de seuil de fiabilité comprenant en outre la consultation de la valeur de seuil de fiabilité dans une table (350) stockée en mémoire, la table contenant une ou plusieurs valeurs de seuil de fiabilité, chaque valeur de seuil de fiabilité étant associée à des paramètres de canal définis ; et
le procédé comprenant en outre l'étape consistant à :
passer dans un mode d'apprentissage (506) dans lequel le décodeur FEC est validé (516) ; et
comprenant en outre les étapes consistant à :
exécuter le contrôle d'intégrité (518) sur des blocs de code décodés ; et
si le contrôle d'intégrité échoue :
déterminer (520) la valeur de seuil de fiabilité pour les paramètres de canal déterminés ;
mettre à jour (522) la valeur de seuil de fiabilité dans la table pour les paramètres de canal déterminés, sur la base de l'échec du décodage, si la valeur de métrique de fiabilité dépasse la valeur de seuil de fiabilité ; et
envoyer (514) le message NAK HARQ à l'émetteur sur un réseau de communication ; et
si le contrôle d'intégrité réussit :
déterminer (528) la valeur de seuil de fiabilité pour les paramètres de canal déterminés ;
mettre à jour (530) la valeur de seuil de fiabilité dans la table pour les paramètres de canal déterminés, sur la base du succès du décodage, si la valeur de métrique de fiabilité est inférieure ou égale à la valeur de seuil de fiabilité ; et
envoyer (532) le message ACK HARQ à l'émetteur sur le réseau de communication.

2. Procédé selon la revendication 1, dans lequel les paramètres de canal comprennent un ou plusieurs des paramètres suivants : type de modulation, taille du bloc de code, nombre de ré-émissions et débit de code.

3. Dispositif (250) destiné à éviter la correction d'erreur directe, FEC, à utiliser dans un dispositif de communication mobile sans fil (100), le dispositif destiné à éviter la correction FEC comprenant :
une unité destinée à déterminer (502) des paramètres de canal pour un canal de radiofréquence, RF, reçu ;
une unité de calcul de métriques (252), destinée à déterminer (404, 504) une valeur de métrique de fiabilité en utilisant soit une mesure de mappage signal sur bruit exponentiel efficace, EESM, soit une mesure d'informations mutuelle du canal RF reçu, la mesure étant effectuée sur un bloc de code fait d'un ou plusieurs blocs de code reçus d'un émetteur, la valeur de métrique de fiabilité augmentant avec une probabilité croissante de succès du décodage ;
une unité de décision (254), destinée à déterminer (406, 508) une valeur de seuil de fiabilité et à comparer (410, 510) la valeur de métrique de fiabilité avec la valeur de seuil de fiabilité afin de sélectivement inhiber (412, 512) un décodeur FEC (204) du dispositif de communication mobile (100) de manière à éviter le processus de décodage lorsque la valeur de métrique de fiabilité est inférieure ou égale à la valeur de seuil de fiabilité, l'unité de décision étant conçue pour ordonner d'envoyer à l'émetteur un message NAK HARQ (414, 514) lorsque le décodeur FEC est inhibé (412), et afin de sélectivement valider (416, 516) le décodeur FEC (204) lorsque la valeur de métrique de fiabilité est supérieure à la valeur de seuil de fiabilité, d'appliquer un contrôle d'intégrité aux blocs de code décodés, d'ordonner d'envoyer à l'émetteur un message ACK HARQ (420, 532) lorsque le contrôle d'intégrité est positif, et d'envoyer un message NAK HARQ (414, 514) lorsque le contrôle d'intégrité n'est pas positif (412) ; et
une table (350) stockée dans la mémoire du dispositif de communication, la table contenant une ou plusieurs valeurs de seuil de fiabilité associées à un ou plusieurs paramètres de canal, l'unité de décision déterminant la valeur de seuil de fiabilité en réalisant une consultation de la table ;
le dispositif destiné à éviter la correction FEC comprenant en outre :
une unité d'apprentissage (256) qui, lorsqu'elle fonctionne en mode d'apprentissage (506), le décodeur FEC étant validé dans ledit mode d'apprentissage (516), utilise les résultats du contrôle d'intégrité sur des blocs de code décodés et, en cas d'échec du contrôle d'intégrité, détermine (520) la valeur de seuil de fiabilité pour les paramètres de canal déterminés ; met à jour (522) la valeur de seuil de fiabilité dans la table pour les paramètres de canal déterminés, sur la base de l'échec du décodage, si la valeur de métrique de fiabilité dépasse la valeur de seuil de fiabilité ; et, si le contrôle d'intégrité réussit, détermine (528) la valeur de seuil de fiabilité pour les paramètres de canal déterminés ; met à jour (530) la valeur de seuil de fiabilité dans la table pour les paramètres de canal déterminés, sur la base du succès du décodage, si la valeur de métrique de fiabilité est inférieure ou égale à la valeur de seuil de fiabilité.

4. Dispositif destiné à éviter la correction d'erreur directe, FEC, selon la revendication 3, dans lequel les paramètres de canal du canal RF reçu comprennent un ou plusieurs des paramètres suivants : type de modulation, taille du bloc de code, nombre de ré-émissions et débit de code.

5. Procédé selon l'une quelconque des revendications 1 et 2, ou dispositif destiné à éviter la correction d'erreur directe, selon l'une quelconque des revendications 3 et 4, dans lequel le décodeur FEC est l'un des décodeurs suivants : turbodécodeur, décodeur à contrôle de parité à faible densité, LDPC, décodeur de bloc de code, décodeur de Reed-Solomon, décodeur de code produit et décodeur convolutif.
